# EUROPEAN PATENT APPLICATION

(11) **EP 4 435 689 A1**
(43) Date of publication of application: **25.09.2024**
(21) Application number: 24164387.3
(22) Date of filing: 19.03.2024
(51) Int. Cl.: G06Q 10/06, G05B 13/04, G05B 19/418

(54) **DEMAND SPECIFICATION FOR PLANT-WIDE OPTIMIZATION OF PROCESSING PLANTS**

(30) Priority: 23.03.2023 US 202363491832 P
(71) Applicant: Honeywell International Inc., Charlotte, NC 28202 (US)
(72) Inventor: WEBB, Christopher J., Charlotte, NC 28202 (US); LU, Joseph Z., Charlotte, NC 28202 (US); ANGHELEA, Constantin Marius, Charlotte, NC 28202 (US); JECH, Jan, Charlotte, NC 28202 (US)
(74) Representative: Haseltine Lake Kempner LLP

(57) **Abstract**

Embodiments of the present disclosure provide for improved optimization of operations of a processing plant. In this regard embodiments optimize, at a plantwide level, operations of a processing plant that utilizes rundown blending to optimize target parameter(s) while ensuring that product specifications of volumes of target products to be produced will be met within particular production durations of product runs. Some embodiments project operational constraints for upstream components, such as multiple headers, to achieve such optimal operations based on current properties and volumes of current products in rundown blenders of a processing plant, and product plan data for any number of target products to be produced over a future period of time.

## Description

### TECHNICAL FIELD

Embodiments of the present disclosure generally relate to optimization of operations of an oil refinery, and specifically to improved demand specification for plant wide optimization of refineries, including refineries with continuous, multi-header blending.

### BACKGROUND

Often, an operator and/or owner of a processing plant desires to operate the processing plant in a manner that optimizes one or more desired variables. For example, often an operator of a processing plant may desire to operate the processing plant in a manner that maximizes the profit generated by the operation of the processing plant over a period of time. Optimization techniques may attempt to take into account the configuration of a particular processing plant, however often poorly account for processing plants of particular configurations, for example processing plants that rely on continuous or "rundown" blending methodologies.

Applicant has discovered problems with current implementations of optimizing operation of a processing plant. Through applied effort, ingenuity, and innovation, Applicant has solved many of these identified problems by developing embodied in the present disclosure, which are described in detail below.

### BRIEF SUMMARY

Various embodiments described herein relate to systems, apparatuses, methods, and computer program products relating to optimization of operations of an oil refinery, and specifically to improved demand specification for plant wide optimization of refineries, including refineries with continuous, multi-header blending.

In accordance with one aspect of the disclosure, a computer-implemented method is provided. In some embodiments, the computer-implemented method may include receiving product plan data comprising, for at least one target product, planned product volume data and planned product timing data. In some embodiments, the computer-implemented method may include generating plant optimization data by at least applying at least the product plan data to a plantwide optimization model associated with a processing plant, the processing plant comprising at least one rundown blender. In some embodiments, the plant optimization data comprises at least one operational constraint for an upstream component corresponding to the at least one rundown blender projected to satisfy at least one product specification corresponding to the at least one target product. In some embodiments, the computer-implemented method may include causing operation of the processing plant based at least in part on the plant optimization data.

In some embodiments, causing operation of the processing plant based at least in part on the plant optimization data comprises causing rendering of the plant optimization data to a user interface that enables a user associated with the user interface to control the processing plant.

In some embodiments, causing operation of the processing plant based at least in part on the plant optimization data comprises automatically reconfiguring operation of at least one physical component of the processing plant based at least in part on the plant optimization data.

In some embodiments, the plant optimization data comprises at least a low limit and at least a high limit for at least one tank feed header property.

In some embodiments, the plant optimization data comprises at least a low limit and at least a high limit for at least one tank integrating control variable property.

In some embodiments, the product plan data comprises a plurality of planned product volume data and a plurality of planned product timing data corresponding to a plurality of target products.

In some embodiments, the plurality of planned product timing data represents a plurality of distinct production durations.

In some embodiments, the plant optimization data comprises a range of values corresponding to at least one operational parameter of a tank feed header.

In some embodiments, the plantwide optimization model is defined based at least in part on a rate specification.

In some embodiments, the plantwide optimization model is defined based at least in part on a volume specification.

In accordance with another aspect of the disclosure, an apparatus is provided. In some embodiments, the apparatus may include at least one processor and at least one non-transitory memory including computer-coded instructions thereon. In some embodiments, the computer-coded instructions, with the at least one processor, cause the apparatus to receive product plan data comprising, for at least one target product, planned product volume data and planned product timing data. In some embodiments, the computer-coded instructions, with the at least one processor, cause the apparatus to generate plant optimization data by at least applying at least the product plan data to a plantwide optimization model associated with a processing plant, the processing plant comprising at least one rundown blender. In some embodiments, the plant optimization data comprises at least one operational constraint for an upstream component corresponding to the at least one rundown blender projected to satisfy at least one product specification corresponding to the at least one target product. In some embodiments, the computer-coded instructions, with the at least one processor, cause the apparatus to cause operation of the processing plant based at least in part on the plant optimization data.

In some embodiments, causing operation of the processing plant based at least in part on the plant optimization data comprises the computer coded instructions, with the at least one processor, further causing the apparatus to cause rendering of the plant optimization data to a user interface that enables a user associated with the user interface to control the processing plant.

In some embodiments, causing operation of the processing plant based at least in part on the plant optimization data comprises the computer coded instructions, with the at least one processor, further causing the apparatus to automatically reconfigure operation of at least one physical component of the processing plant based at least in part on the plant optimization data.

In some embodiments, the plant optimization data comprises at least a low limit and at least a high limit for at least one tank feed header property.

In some embodiments, the plant optimization data comprises at least a low limit and at least a high limit for at least one tank integrating control variable property.

In some embodiments, the product plan data comprises a plurality of planned product volume data and a plurality of planned product timing data corresponding to a plurality of target products.

In some embodiments, the plurality of planned product timing data represents a plurality of distinct production durations.

In some embodiments, the plant optimization data comprises a range of values corresponding to at least one operational parameter of a tank feed header.

In some embodiments, the plantwide optimization model is defined based at least in part on a rate specification.

In some embodiments, the plantwide optimization model is defined based at least in part on a volume specification.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for receiving product plan data comprising, for at least one target product, planned product volume data and planned product timing data. In some embodiments, the computer program code, in execution with at least one processor, configures the computer program product for generating plant optimization data by at least applying at least the product plan data to a plantwide optimization model associated with a processing plant, the processing plant comprising at least one rundown blender. In some embodiments, the plant optimization data comprises at least one operational constraint for an upstream component corresponding to the at least one rundown blender projected to satisfy at least one product specification corresponding to the at least one target product. In some embodiments, the computer program code, in execution with at least one processor, configures the computer program product for causing operation of the processing plant based at least in part on the plant optimization data.

In some embodiments, causing operation of the processing plant based at least in part on the plant optimization data comprises the computer program code stored thereon that, in execution with at least one processor, further configures the computer program product for causing rendering of the plant optimization data to a user interface that enables a user associated with the user interface to control the processing plant.

In some embodiments, causing operation of the processing plant based at least in part on the plant optimization data comprises the computer program code stored thereon that, in execution with at least one processor, further configures the computer program product for automatically reconfiguring operation of at least one physical component of the processing plant based at least in part on the plant optimization data.

In some embodiments, the plant optimization data comprises at least a low limit and at least a high limit for at least one tank feed header property.

In some embodiments, the plant optimization data comprises at least a low limit and at least a high limit for at least one tank integrating control variable property.

In some embodiments, the product plan data comprises a plurality of planned product volume data and a plurality of planned product timing data corresponding to a plurality of target products.

In some embodiments, the plurality of planned product timing data represents a plurality of distinct production durations.

In some embodiments, the plant optimization data comprises a range of values corresponding to at least one operational parameter of a tank feed header.

In some embodiments, the plantwide optimization model is defined based at least in part on a rate specification.

In some embodiments, the plantwide optimization model is defined based at least in part on a volume specification.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a block diagram of a system that may be specially configured within which embodiments of the present disclosure may operate.
FIG. 2 illustrates a block diagram of an example apparatus that may be specially configured in accordance with one example embodiment of the present disclosure.
FIG. 3 illustrates a flowsheet model of a physical layout of an example processing plant in accordance with at least one example embodiment of the present disclosure.
FIG. 4 illustrates a visualization of product storage in a rundown blender in accordance with at least one example embodiment of the present disclosure.
FIG. 5 illustrates a visualization of product storage in a plurality of rundown blenders in accordance with at least one example embodiment of the present disclosure.
FIG. 6 illustrates formulas utilized by a plantwide optimization model for a rundown blender with no outflow in accordance with at least one example embodiment of the present disclosure.
FIG. 7 illustrates formulas utilized by a plantwide optimization model for a rundown blender with outflow in accordance with at least one example embodiment of the present disclosure.
FIG. 8 illustrates a visualization of operational constraints in accordance with at least one example embodiment of the present disclosure.
FIG. 9 illustrates a visualization of operational constraints for incremental tank feed header properties to reach a final volume in accordance with at least one example embodiment of the present disclosure.
FIG. 10 illustrates a visualization of operational constraints for a plurality of field headers and a plurality of rundown blenders in accordance with at least one example embodiment of the present disclosure.
FIG. 11 illustrates an example process 1100 for improved optimization of processing plant control.
FIG. 12 illustrates an example visualization of data visibility of an optimization mechanism.
FIG. 13 illustrates a visualization of optimization data produced by conventional mechanisms as compared to plant optimization data produced in accordance with at least some embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### OVERVIEW

Often, an entity desires to operate a processing plant (e.g., an oil refinery) in a particular manner to optimize one or more target parameters. For example, often an entity (e.g., an owner or operator) desires to operate a processing plant in a manner that optimizes revenue generated by the processing plant while simultaneously operating in a safe manner, meeting existing product obligations, and the like. Such optimization goals exist regardless of refinery configuration and components thereof.

In some contexts, a processing plant operates using continuous blending operations (e.g., utilizing rundown blender(s)) supported by multiple commercial production tanks produced online. In such contexts, refinery process units produce and provide individual products that serve as components for continuous blending online to field blending main headers, where the headers send their output streams to the multiple final commercial tanks. Each commercial tank produced onstream may contain different current product types (e.g., based on current product qualities), have different planned production blending volume(s), have different production time horizons, and/or have different quality specifications at final desired volumes. Each of these elements must be considered in operating the processing plant to ensure that particular requirements are met while simultaneously optimizing operation of the processing plant.

Entities responsible for plant management, particularly of continuous processing plants such as an oil refinery using continuous or rundown blending, desire to optimize plant production as a whole at all times. Such optimization often maximizes profit, but can also smooth transitions in response to process upsets that extend the lifetime of units within the processing plant and/or improve overall safety associated with operation of the processing plant. Often, such optimization is derived from a high level view and interactions between various teams associated with plant operation, for example a planning team, scheduling team, and operations team. Using a high-level optimization model, the planning team often specifies operating goals for a typical period (for example, one to two weeks) based on any of a myriad of available data, such as and without limitation expected product margins, sales projections, and/or the like. The plan generated by the planning team is subsequently acted upon by the operations team and revised throughout the planning period as newly arising plant limitations affect adherence to the original plan. Existing software optimization mechanisms attempt to aid in this optimization endeavor, however such mechanisms often optimize production over a fixed period of time and do not target individual blends.

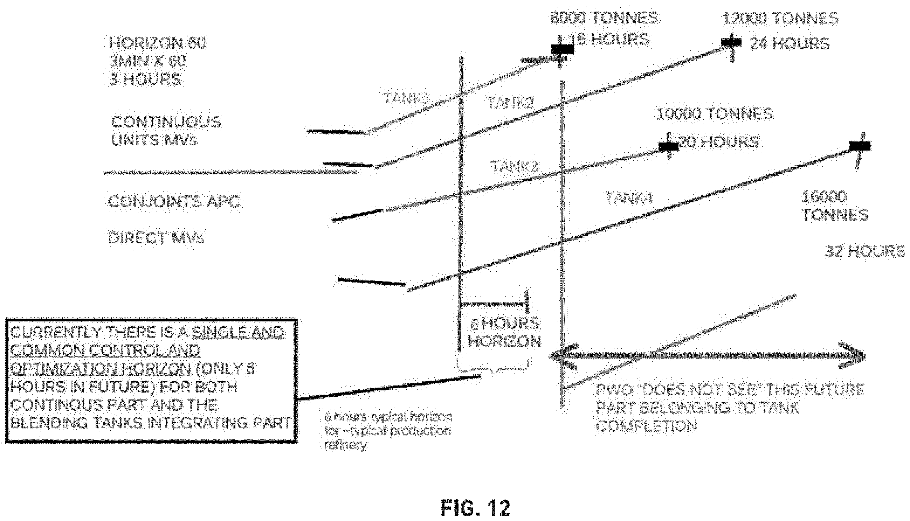

In the context of continuous blending, continuous refinery handles (e.g., manipulated variables) are common for all of multiple commercial tanks being produced, such that the same set of manipulated variables moves must be calculated to meet the multiple product specifications at full volume for each commercial tank. However, often times existing optimization algorithms include a single and common control and optimization horizon, which is applied for both a continuous production refinery portion and a tanks blending portion. For example, usually refinery predicted optimization horizons may vary between a relatively short time horizon of typically 6-8 hours, while blended production commercial tanks may be associated with production times that are significantly higher, for example varying between 1 and 3 days. In this regard, such optimization mechanisms remain insufficient and/or inaccurate for use in these contexts. Individual product specifications for each of the tanks (e.g., rundown blenders) simultaneously produced are required to be online right the first time at the end of each production duration for a specific tank, as tanks are often sent directly for commercial certification. For example, FIG. 12 depicts an example visualization of data visibility to conventional optimization mechanisms for particular planned productions of multiple target products associated with multiple, distinct tanks and distinct production durations. Specifically, as depicted in FIG. 12, TANK1 desired volume is 8000 tonnes with production duration 16 hours, TANK2 desired volume is 12000 tonnes with production duration 24 hours, TANK3 desired volume is 10000 tonnes with production duration 20 hours, TANK4 desired volume is 16000 tonnes with production duration 20 hours. Typically, the refinery prediction horizon is 6-8 hours, however the remaining time until the tanks complete production of the full volume of a particular target product is not considered by existing plantwide optimization ("PWO") mechanisms.

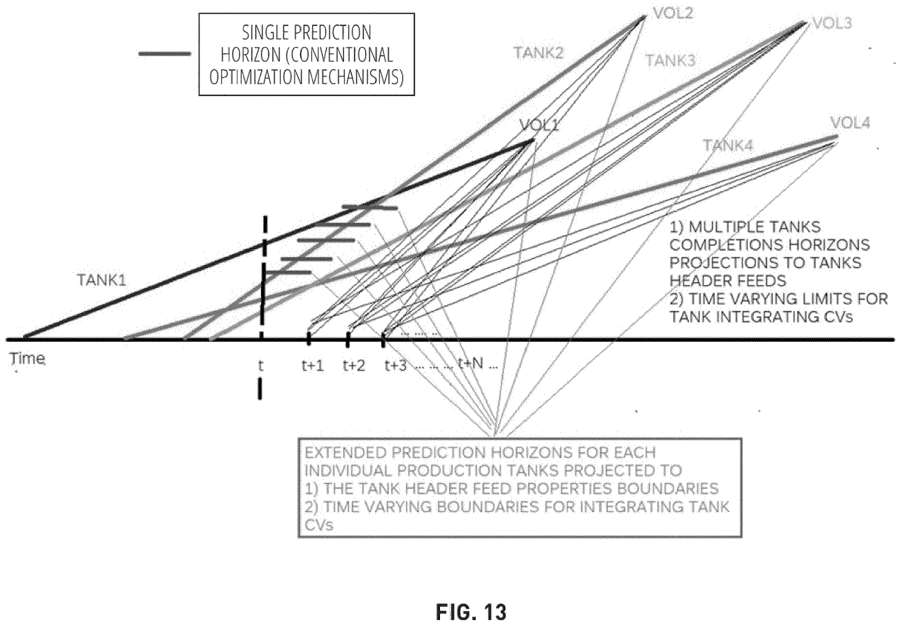

Embodiments of the present disclosure provide for improved plantwide optimization mechanisms. Such improved plantwide optimization mechanisms account for any number of distinct production horizons embodying distinct production durations. In this regard, embodiments project end horizons for desired product specification back to current time specifications, thus defining operational constraints (e.g., high limit and/or low limit boundaries) for upstream components of such tanks embodying rundown blenders of a processing plant. For example, some embodiments calculate optimal boundaries of low and/or high limits for tank feed header properties, and/or optimal boundaries of low and/or high limits for tank integrating controlled variable (CV) properties at a desired incremental production volume in a future as compared to a current time. For example, FIG. 13 depicts a visualization of plant optimization data produced in accordance with at least some embodiments of the present disclosure for multiple tanks embodying multiple rundown blenders across any arbitrary time horizon t+N, where t represents the current timestamp.

In this regard, embodiments of the present disclosure provide an alternative view of optimization that focuses on operational efficiency. In such contexts, upstream operation associated with a rundown blender is optimized in the most efficient way to make one or more target products downstream. Such a model is generally applicable to processing plants with no intermediary storage of input products, specifically input intermediate products to the final commercial tanks, making such plantwide optimization models suitable for use in continuous blending processing plants that leverage rundown blenders. As a product tank switches to a new target product, upstream operation is adjusted to account for the new product specification of the new target product.

Embodiments of the present disclosure provide further compounded advantages in the context where multiple rundown blenders are employed in a processing plant. Often, one or more blender(s) may go online and/or offline, for example as a product tank fills. Each of the blends associated with a given rundown blender may have a different horizon embodying a production duration when the tank is to reach the full desired volume. In this regard, the plantwide optimization models described herein handle such circumstances that are not supported by existing optimization mechanisms.

### DEFINITIONS

"Operational constraint" refers to electronically managed data representing a boundary value for at least one parameter or characteristic associated with operation of a processing plant or particular physical component(s) thereof.

"Physical component" refers to a real-world machine, tank, pipe, or other physical structure within a processing plant that is utilized in a process performed by the processing plant. In an example context of an oil refinery plant, non-limiting examples of a physical component include a component storage tank, a blender, a product tank, a pump, a heat exchanger, a pressure vessel, a pipe or piping system, and a valve.

"Planned product timing data" refers to electronically managed data that represents a particular timestamp at which a particular volume of product is to be produced

"Planned product volume data" refers to electronically managed data that represents a volume of a particular product to be produced.

"Plant optimization data" refers to electronically managed data representing or otherwise indicating at least one manner in which a processing plant, or one or more physical components thereof, are to be operated to optimize one or more parameters.

"Plantwide optimization model" refers to an algorithmic, statistical, or machine learning model that is specially configured to generate optimization data for a processing plant as a whole, where such optimization data optimizes one or more variables for operation of a processing plant as a whole based at least in part on product plan data.

"Processing plant" refers to any building, complex, or arrangement of components that perform a chemical, physical, electrical, or mechanical process for producing at least one target product from one or more input product(s). Non-limiting examples of a processing plant include a chemical processing plant and an oil refinery.

"Product plan data" refers to electronically managed data indicating a particular volume of a particular type of target product to be produced by a particular processing plant by a particular timestamp, where such data is included for any number of distinct target product.

"Product specification" refers to electronically managed data defining particular qualities or properties that a particular target product must have to be deemed satisfactory as a particular product type.

"Production duration" refers to electronically managed data representing a timestamp interval between a current timestamp and a future timestamp at which a particular volume of a particular target product is to be produced.

"Rundown blender" refers to any processing that blends one or more input products to produce a target product without use of intermediary storage tank, or with the use of minimal intermediary storages such that the existence of such storage tanks is statistically minimized.

"Target product" refers to a particular substance, mixture, or other good produced via processing of one or more input component(s). Distinct types of processing plants produce distinct types of target products. In the context of oil refineries, non-limiting examples of a target product include gasoline of distinct grades, diesel, jet fuel, and asphalt.

"Upstream component" with respect to a first physical component of a processing plant refers to a second physical component of a processing plant that produces a product that is utilized as an input product by the first physical component.

### EXAMPLE OPERATIONS OF THE DISCLOSURE

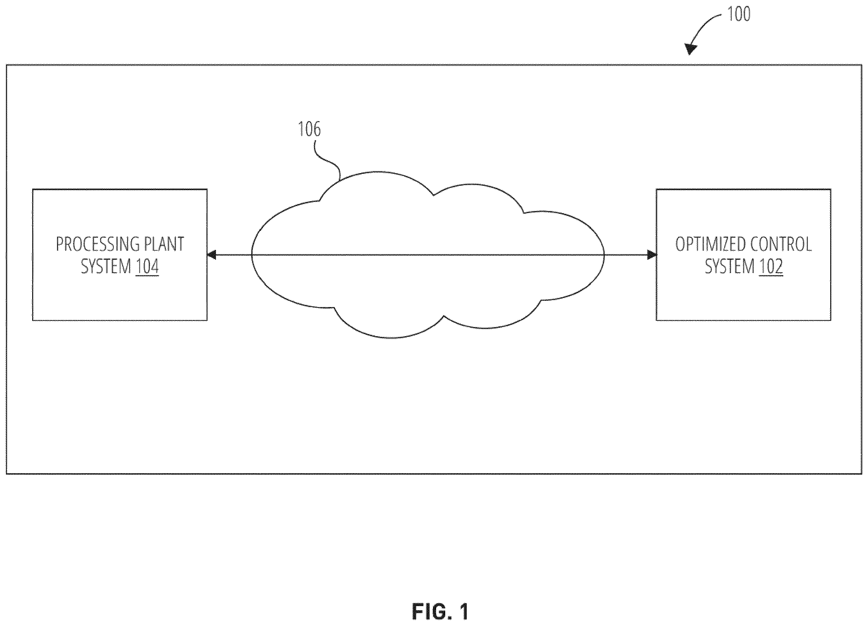

FIG. 1 illustrates a block diagram of a system that may be specially configured within which embodiments of the present disclosure may operate. Specifically, FIG. 1 depicts an example system 100. As illustrated, the system 100 includes a processing plant system 104 in communication with an optimized control system 102. In some embodiments, the processing plant system 104 communicates with the optimized control system 102 over one or more communications network(s), for example a communications network 106.

It should be appreciated that the communications network 106 in some embodiments is embodied in any of a myriad of network configurations. In some embodiments, the communications network 106 embodies a public network (e.g., the Internet). In some embodiments, the communications network 106 embodies a private network (e.g., an internal localized, or closed-off network between particular devices). In some other embodiments, the communications network 106 embodies a hybrid network (e.g., a network enabling internal communications between particular connected devices and external communications with other devices). The communications network 106 in some embodiments includes one or more base station(s), relay(s), router(s), switch(es), cell tower(s), communications cable(s) and/or associated routing station(s), and/or the like. In some embodiments, the communications network 106 includes one or more user controlled computing device(s) (e.g., a user owned router and/or modem) and/or one or more external utility devices (e.g., Internet service provider communication tower(s) and/or other device(s)).

Each of the components of the system 100 communicatively coupled to transmit data to and/or receive data from one another over the same or different wireless and/or wired networks embodying the communications network 106. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 106, the various embodiments are not limited to this architecture. In other embodiments, one or more computing entities share one or more components, hardware, and/or the like, or otherwise are embodied by a single computing device such that connection(s) between the computing entities are over the communications network 106 are altered and/or rendered unnecessary. For example, in some embodiments, the processing plant system 104 includes some or all of the optimized control system 102, such that an external communications network 106 is not required.

In some embodiments, the processing plant system 104 and the optimized control system 102 are embodied in an on-premises system within or associated with the processing plant. In some such embodiments, the processing plant system 104 and the optimized control system 102 are communicatively coupled via at least one wired connection. Alternatively or additionally, in some embodiments, the processing plant system 104 embodies or includes the optimized control system 102, for example as a software component of a single enterprise terminal.

The processing plant system 104 includes any number of computing device(s), system(s), physical component(s), and/or the like, that facilitates producing of any number of target products, for example utilizing particular configurations that cause processing of particular input products available to the processing plant system 104. In some embodiments, the processing plant system 104 includes one or more physical component(s), connection(s) between physical component(s), and/or computing system(s) that control operation of each physical component therein. In one example context, the processing plant system 104 embodies an oil refinery, which includes physical component(s) embodying rundown blender(s), processing unit(s), and/or other component(s) that perform particular process(es) to alter properties of input products received at the physical component, crude flow unit(s), piping between such physical component(s), valve(s) controlling flow between the physical component(s), and/or the like. Additionally or alternatively, in some embodiments the processing plant system 104 includes one or more computing system(s) that are specially configured to operate the physical component(s) in a manner that produces one or more particular target product(s) simultaneously, for example to different rundown blender(s) of or associated with the processing plant system 104. In some embodiments, a processing plant system 104 includes one or more computing device(s) and/or system(s) embodied in hardware, software, firmware, and/or a combination thereof, that configure and/or otherwise control operation of one or more physical component(s) in the processing plant. For example, in some embodiments, such computing device(s) and/or system(s) include one or more programmable logic controller(s), MPC(s), application server(s), centralized control system(s), and/or the like, that control(s) configuration and/or operation of at least one physical component. It will be appreciated that different processing plant system(s) 104 may include different physical component(s), computing system(s), and/or the like. For example, different refinery plants may include different components, different number of components, different types of components, and/or the like, that cause the processing plant system to operate differently from other refinery plants.

The optimized control system 102 includes one or more computing device(s) and/or system(s) embodied in hardware, software, firmware, and/or a combination thereof, that performs an optimization process for at least one processing plant. In some embodiments, an optimized control system 102 includes one or more specially configured application server(s), database server(s), end user device(s), cloud computing system(s), and/or the like. Additionally or alternatively, in some embodiments, the optimized control system 102 includes one or more client devices, user devices, and/or the like, that enables access to functionality provided via the optimized control system 102, for example via a web application, native application, and/or the like.

In some embodiments the optimized control system 102 is specially configured to perform an improved optimization process utilizing the plantwide optimization model(s) as depicted and described herein to generate plant optimization data for a processing plant including any number of rundown blenders based on product plan data. For example, in some embodiments, the optimized control system 102 is configured to utilize a specially configured plantwide optimization model, as described herein, to generate plant optimization data that optimizes one or more particular parameter(s) while simultaneously enabling a processing plant to satisfy target product volume and production duration requirements based on the configuration of the processing plant and/or current status of one or more products existing in the processing plant. In some such embodiments, the optimized control system 102 is configured to enable optimization of processing plants that include any number of rundown blenders and perform continuous blending accordingly. Additionally or alternatively, in some embodiments, the optimized control system 102 determines, generates, and/or otherwise identifies particular data utilized to control operation of the physical component(s) of or associated with the processing plant system 104, for example to control the processing plant in accordance with generated plant optimization data. In some embodiments, the optimized control system 102 includes or embodies a display or other user interface to which a user-facing interface is renderable.

In some embodiments, the optimized control system 102 and/or processing plant system 104 communicate with one another to perform the various actions described herein. For example, in some embodiments, the optimized control system 102 and the processing plant system 104 communicate to generate plant optimization data associated with operation of a particular processing plant via the particular optimization processes described herein. Additionally or alternatively, in some embodiments, the optimized control system 102 and the processing plant system 104 communicate to facilitate control of the processing plant based at least in part on the generated optimized operational parameter(s). For example, in some embodiments the optimized control system 102 and the processing plant system 104 communicate to configure one or more physical component(s) of the processing plant to produce particular target product(s) based at least in part on the plant optimization data automatically. In other embodiments, the optimized control system 102 causes control of the processing plant based at least in part on plant optimization data, for example via manual operation in response to data outputted by the optimized control system 102.

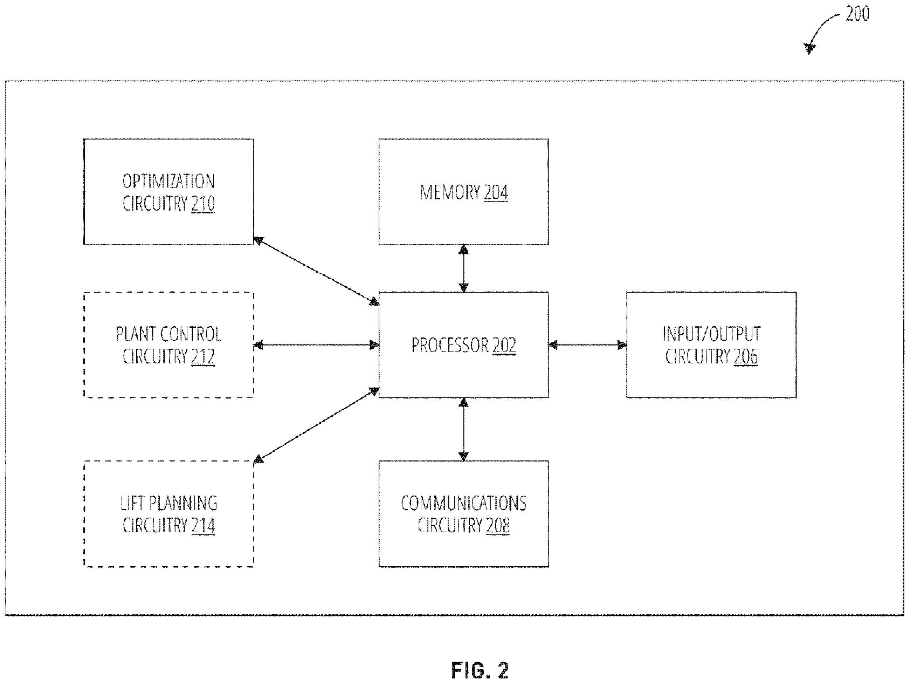

FIG. 2 illustrates a block diagram of an example apparatus that may be specially configured in accordance with at least one example embodiment of the present disclosure. Specifically, FIG. 2 depicts an example optimization apparatus 200 ("apparatus 200") specially configured in accordance with at least some example embodiments of the present disclosure. In some embodiments, the optimized control system 102 and/or a portion thereof is embodied by one or more system(s), such as the apparatus 200 as depicted and described in FIG. 2. The apparatus 200 includes processor 202, memory 204, input/output circuitry 206, communications circuitry 208, optimization circuitry 210, plant control circuitry 212, and lift planning circuitry 214. In some embodiments, the apparatus 200 is configured, using one or more of the processor 202, memory 204, input/output circuitry 206, communications circuitry 208, optimization circuitry 210, plant control circuitry 212, and/or lift planning circuitry 214, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with performing an improved optimization process, for example to account for multiple headers and multiple rundown blenders based on particular product plan data as described herein. In some embodiments, the processor 202 includes hardware, software, firmware, and/or a combination thereof, that receives and/or identifies data utilized by the optimization process. Additionally or alternatively, in some embodiments, the processor 202 includes hardware, software, firmware, and/or a combination thereof, that applies such received and/or identified data to at least one plantwide optimization model specially configured as depicted and described herein to generate plant optimization data. Additionally or alternatively, in some embodiments, the processor 202 includes hardware, software, firmware, and/or a combination thereof, that causes control of a processing plant based at least in part on the plant optimization data. Additionally or alternatively, in some embodiments, the processor 202 includes hardware, software, firmware, and/or a combination thereof, that generates or otherwise configures a lift schedule based at least in part on the plant optimization data and/or control of one or more physical component(s) of a processing plant.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s) , and/or other external computing device in communication with the apparatus 200.

The optimization circuitry 210 includes hardware, software, firmware, and/or a combination thereof, that supports performing a specially configured optimization process as described herein. For example, in some embodiments, the optimization circuitry 210 includes hardware, software, firmware, and/or a combination thereof, that identifies a flowsheet model or other representation embodying a configuration or layout of physical components of a processing plant. Additionally, or alternatively, in some embodiments, the optimization circuitry 210 includes hardware, software, firmware, and/or a combination thereof, that receives or otherwise identifies product plan data associated with operation of a processing plant. Additionally or alternatively, in some embodiments, the optimization circuitry 210 includes hardware, software, firmware, and/or a combination thereof, that applies at least the product plan data to at least one plantwide optimization model to generate corresponding plant optimization data. In some embodiments, the optimization circuitry 210 includes a separate processor, specially configured field programmable gate array (FPGA), or a specially programmed application specific integrated circuit (ASIC).

The optional plant control circuitry 212 includes hardware, software, firmware, and/or a combination thereof, that supports various functionality associated with causing configuration or other causing operation of at least one physical component of a processing plant. For example, in some embodiments, the plant control circuitry 212 includes hardware, software, firmware, and/or a combination thereof, that causes operation of a physical component based at least in part on generated plant optimization data. Additionally or alternatively, in some embodiments, the plant control circuitry 212 includes hardware, software, firmware, and/or a combination thereof, that causes operation of a plurality of physical components based at least in part on the plant optimization data, for example via transmission of a command or message to another system. Additionally or alternatively, in some embodiments, the plant control circuitry 212 includes hardware, software, firmware, and/or a combination thereof, that causes rendering of a specially configured user interface utilized to control operation of a particular processing plant based at least in part on plant optimization data. In some embodiments, the plant control circuitry 212 includes a separate processor, specially configured field programmable gate array (FPGA), or a specially programmed application specific integrated circuit (ASIC).

The optional lift planning circuitry 214 includes hardware, software, firmware, and/or a combination thereof, that supports various functionality associated with configuring a lift schedule. For example, in some embodiments, the lift planning circuitry 214 includes hardware, software, firmware, and/or a combination thereof, that enables configuration of a lift schedule by assigning a time slices to particular lift of a final product available at that time slice. Additionally or alternatively, in some embodiments, the lift planning circuitry 214 includes hardware, software, firmware, and/or a combination thereof, that enables configuration of the lift schedule based at least in part on the plant optimization data and/or product plan data. Additionally or alternatively, in some embodiments, the lift planning circuitry 214 includes hardware, software, firmware, and/or a combination thereof, that generates a user-facing interface that enables input of a planned lift (e.g., a scheduled pickup of a particular product) at a particular times slice. In some embodiments, the lift planning circuitry 214 includes a separate processor, specially configured field programmable gate array (FPGA), or a specially programmed application specific integrated circuit (ASIC).

Additionally or alternatively, in some embodiments, two or more of the sets of circuitries embodying processor 202, memory 204, input/output circuitry 206, communications circuitry 208, optimization circuitry 210, plant control circuitry 212, and/or lift planning circuitry 214 are combinable. Alternatively or additionally, in some embodiments, one or more of the sets of circuitry perform some or all of the functionality described associated with another component. For example, in some embodiments, two or more of the processor 202, memory 204, input/output circuitry 206, communications circuitry 208, optimization circuitry 210, plant control circuitry 212, and/or lift planning circuitry 214 are combined into a single module embodied in hardware, software, firmware, and/or a combination thereof. Similarly, in some embodiments, one or more of the sets of circuitry, for example the optimization circuitry 210, plant control circuitry 212, and/or lift planning circuitry 214, is/are combined with the processor 202, such that the processor 202 performs one or more of the operations described above with respect to each of the optimization circuitry 210, plant control circuitry 212, and lift planning circuitry 214.

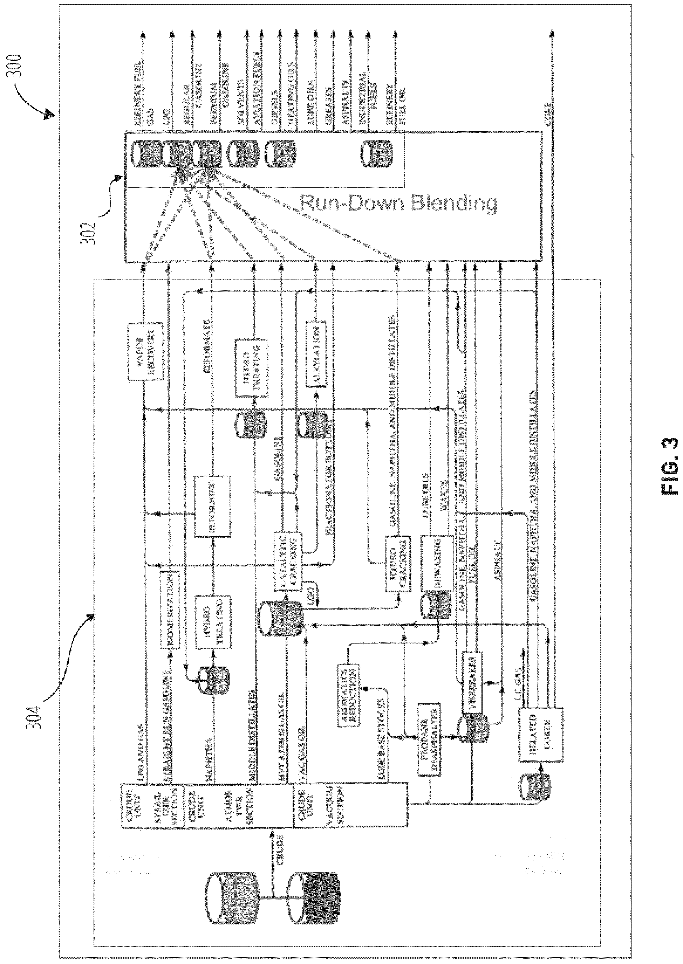

FIG. 3 illustrates a flowsheet model of a physical layout of an example processing plant in accordance with at least an example embodiment of the present disclosure. Specifically, FIG. 3 depicts an example layout representation 300 of a processing plant. In this regard, in some embodiments the layout representation 300 depicts a physical layout and configuration of the physical components and interconnections therebetween of a particular processing plant. As illustrated, the example processing plant is an oil refinery. It will be appreciated that in other embodiments, other processing plants may be utilized.

In some embodiments, the layout representation 300 is stored as data made available for processing during an optimization process. For example, in some embodiments, the apparatus 200 stores the layout representation 300. The apparatus 200 may receive data embodying the layout representation 300 from an external system, receive input from a user defining the layout representation 300 and store corresponding data representing the layout representation 300 accordingly, and/or the like. In this regard, the data embodying the layout representation 300 in some embodiments is retrievable for processing and/or configuring a plantwide optimization model, for example such that the plantwide optimization model accurately reflects the configuration of the processing plant as defined by the layout representation 300.

The layout representation 300 includes a plurality of physical representations. In some embodiments, each physical representation is embodied by an element within the flowsheet model as depicted. Each element may represent a particular physical component within the processing plant itself. Additionally, the flowsheet model may define physical connections between said physical components. In this regard, input products may flow between such physical components based on such physical connections, for example for use in producing one or more final products via the processing plant represented by the layout representation 300.

As illustrated, the layout representation 300 includes one or more physical representation(s) of product tank(s) 302 and one or more physical representation(s) of processing unit(s) 304. The product tank(s) in some embodiments each embody a rundown blender of the processing plant. In some embodiments, the processing units depicted in the physical representations of processing units 304 source a particular input product, utilize the product as input to a particular process, and/or processing incoming input products in a particular manner to yield an output product. For example, as illustrated, the physical representations of processing components 304 includes crude flow units, hydro treating processing units, reforming processing units, isomerization processing units, aromatics reduction processing units, and the like. It will be appreciated that any number, type, and/or configuration of processing units may be included in a particular processing plant.

In some embodiments, one or more of the physical representation of processing units 304 each flow to one or more particular physical representation(s) of product tank(s) 302. In some embodiments, a physical representation of a product tank 302 represents a corresponding physical rundown blender in the processing plant. Such processing units are depicted as connected via physical connections to one or more other upstream and/or downstream unit(s). In this regard, each of the processing components 304 embodies an upstream component to one or more of the rundown blenders embodied by the product tank(s) 302. At a particular time slice, the physical rundown blender may be configured to produce a particular target product, for example based at least in part on input product(s) received via the processing unit(s) represented by the physical representations of processing units 304, to meet particular a product specification corresponding to a target product assigned to that rundown blender. In this regard, each rundown blender may serve as a final processing unit and/or a final storage for a particular type of final product. Such processing plants do not include intermediary storage tanks, for example that store intermediary input components utilized by the product tank(s), that would serve as a buffer for use in producing particular final products. In some embodiments, a processing plant utilizing such rundown blending does not include any intermediary storage tank. In other embodiments, a processing plant utilizing rundown blending has some intermediary storage tank(s), but includes a limited amount of intermediary storage tanks. It will be appreciated that different processing plants may include different number, configuration, and/or types of blenders.

The physical representations of the processing plant in some embodiments correspond to the current operation of the physical component(s) therein. In this regard, the layout representation 300 provides visibility only into the final product(s) currently being produced, and does not provide any insight or knowledge into what final product(s) is/are next. In this regard, optimization for the current operation alone may result in a myopic or otherwise insufficient optimization-for example that leads to current operation that is better profitable now but reduces long-term profitability of the processing plant. Similarly, existing optimization mechanisms that are forward looking may be insufficient by failing to account for a satisfactory time period.

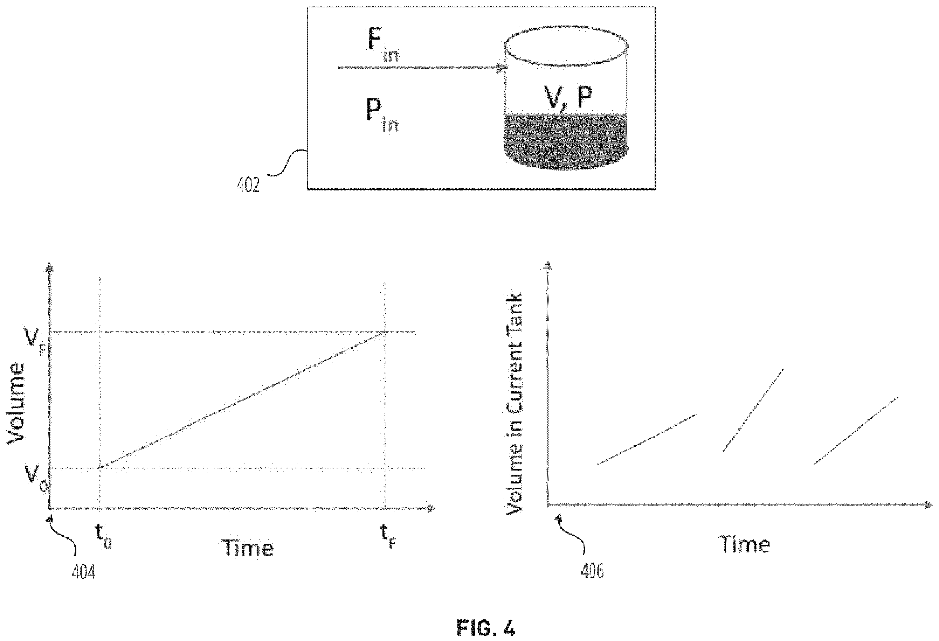

FIG. 4 illustrates a visualization of product storage in a rundown blender in accordance with at least one example embodiment of the present disclosure. Specifically, FIG. 4 illustrates product storage for a rundown blender depicted by rundown blender visualization 402. As depicted, the rundown blender receives an input flow of input product, but is assumed to not include any outflow. In this regard, for purposes of such optimization it is assumed that a product accumulates in the tank embodied by or as part of the rundown blender and then is conveyed to the end customer. Tank certification generally occurs after the tank is filled to the desired target volume. It will be appreciated that in some embodiments, an outflow may be initiated before a blending process is actually completed (e.g., before the volume in the tank reaches the target volume at the end of a production duration), however such outflows in some embodiments are ignored for purpose of performing the optimization process using the optimization models described herein. The rundown blender specifically receives an incoming flowrate represented by Fin, where the incoming flow of input product has a given set of properties represented by Pᵢₙ.

Assuming a constant flowrate, the volume of the product in the rundown blender increases linearly. In this regard, the volume of a product in the rundown blender is represented by the graphical representation 404. The volume of product in the rundown blender may continue to increase until a final volume is reached represented by V_{F}.

Upon switching of a tank to a new tank, the starting conditions are reset. In this regard, the volume in the rundown blender may be reset to a particular volume. Depicted graphically, the volume of the rundown blender can be represented as a sawtooth pattern as depicted with respect to graphical representation 406. In some embodiments, the starting volume and/or the final volume to which a product tank is to be filled may differ. Additionally or alternatively, in some embodiments, the rate at which a product tank is filled similarly may differ.

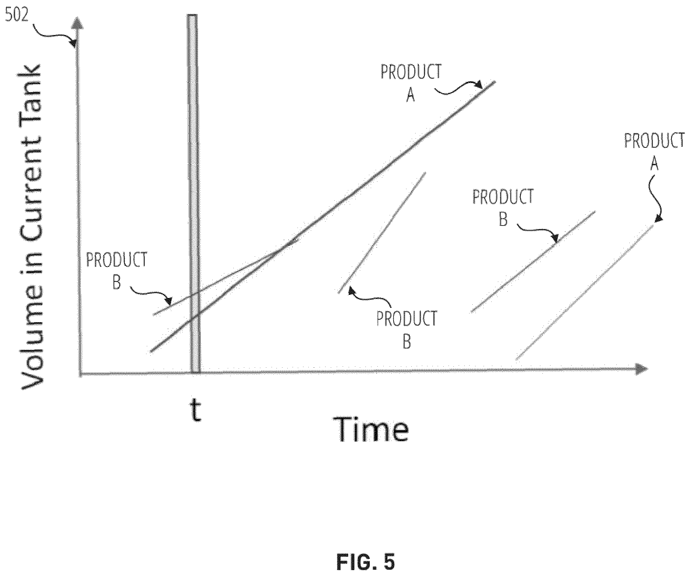

Such representations may similarly be extended for depicting blending into multiple product tanks embodied by or as part of multiple rundown blenders. FIG. 5 illustrates a visualization of product storage in a plurality of rundown blenders in accordance with at least one example embodiment of the present disclosure. Specifically, FIG. 5 depicts graphical representation 502 for a plurality of rundown blenders producing different target products at various distinct times and over a plurality of different production durations. As depicted, the time intervals during which particular productions of some such products overlap, such that a plurality of rundown blenders are utilized. In this regard, at any given time represented by time t, multiple products may be filled at distinct product tanks embodied by distinct rundown blenders, with each end point for each product similarly being distinct. In some embodiments, the graphical representation 502 represents a visualization of product plan data, including planned product volume data represented by the value along the y-axis of the graphical representation 502 at a given timestamp and planned product timing data represented by the value along the x-axis of the graphical representation 502 at a given timestamp.

A plantwide optimization model may be applied to determine how to operate the processing plant in an optimized manner while simultaneously satisfying the requirements set forth in the graphical representation 502. In this regard, the plantwide optimization model may be configured to satisfy the goal of having sufficient volume of target product at particular timestamp at which a production duration is to terminate for all such target products represented in particular product plan data.

Given the various endpoints and continuous nature of rundown blending, the optimization of each individual rundown blender may not be performed directly. In some embodiments, the plantwide optimization model is specially configured to optimize upstream components associated with such rundown blenders (e.g., processing components that feed into a given rundown blender) and inlet flowrates to such rundown blenders. In this regard, changes in the inlet flow and quality of input products may be projected on the final rundown blender. In this manner, if a product in a rundown blender is projected to be off from a product specification corresponding to a desired target product assigned to that rundown blender when the tank is full, one or more configurations (e.g., inlet flow and/or input product quality) can be adjusted via the plantwide optimization model.

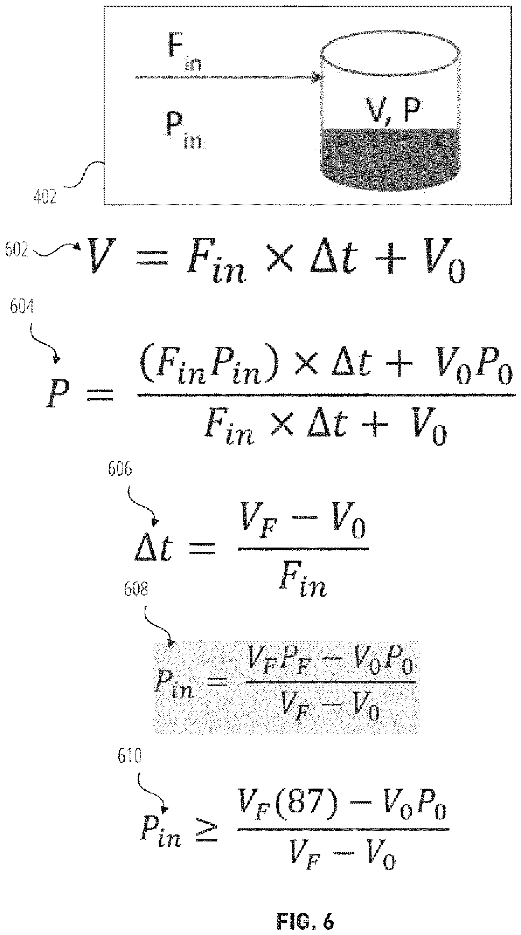

FIG. 6 illustrates formulas utilized by a plantwide optimization model for a rundown blender with no outflow in accordance with at least one example embodiment of the present disclosure. Specifically, FIG. 6 depicts formulas utilized by a plantwide optimization model corresponding to the rundown blender visualization 402, which is assumed to have no outflows. In some embodiments, final qualities associated with a product in the rundown blender are projected utilizing any of a myriad of known blending models. For example, some embodiments utilize blending models that take into account a rate specification model based at least in part on flow rates of input products. Additionally or alternatively, some embodiments utilize blending models that take into account a volume specification model based at least in part on incoming product volumes instead of a flowrates.

As illustrated, the rundown blender is associated with a volume, V, and a set of product qualities, P. The inflowing input product is similarly associated with a flowrate Fᵢₙ and has the product qualities represented by Pᵢₙ. The input product is mixed with the product existing in the rundown blender already utilizing a continuous stirred tank model. In this regard, using a blending model, the volume of the product in the rundown blender is estimated by the formula 602, and the corresponding properties for such a volume of product is estimated by the formula 604, where V₀ represents a starting volume of product in the rundown blender and P₀ represents starting properties of the product in the rundown blender, and Δt represents a remaining time to completion of a production duration defined by one or more time step (e.g., a defined change in time).

Based on these formulas, subsequent formulas may be derived based at least in part on known final states defined in product plan data. For example, knowing a final volume when a rundown blender is full for a particular production, represented by V_{F}, and the product properties, represented by P_{F}, expected for the final product to be satisfy a product specification for a target product, inlet properties of an input product required to obtain the final properties for the product to embody a particular target product are derivable. For example, formula 606 and formula 608 may be derived from formula 602 and formula 604 via substitution and rearrangement to solve for the relevant variables Δt and Pᵢₙ, as depicted. The formula 608 relates to the inlet properties are for the final blend volume represented by V_{F} and where the final blend properties represented by P_{F} are known. In this regard, the optimization model selects the best final tank properties based on the optimization parameters. In formula 610, limits on Pᵢₙ are determined to ensure the final properties of the product in the final tank are within high and low limits for a particular property, such as octane as depicted and further described below.

In some embodiments, known product property data is utilized in such formulas. For example, in some embodiments product property values represented in product property data may be read from a product in a rundown blender. Alternatively or additionally, in some embodiments one or more product properties from a product specification associated with the target product may be utilized in the formulas as depicted and described.

It will be appreciated that in some embodiments, the formula associated with a particular property of a product may be defined as a bounded or unbounded range. For example, as illustrated, formula 610 is depicted representing an inequality for a particular property Pᵢₙ. Specifically, formula 610 represents an inequality that indicates a minimum level of a particular property (e.g., a minimum octane of 87, as depicted).

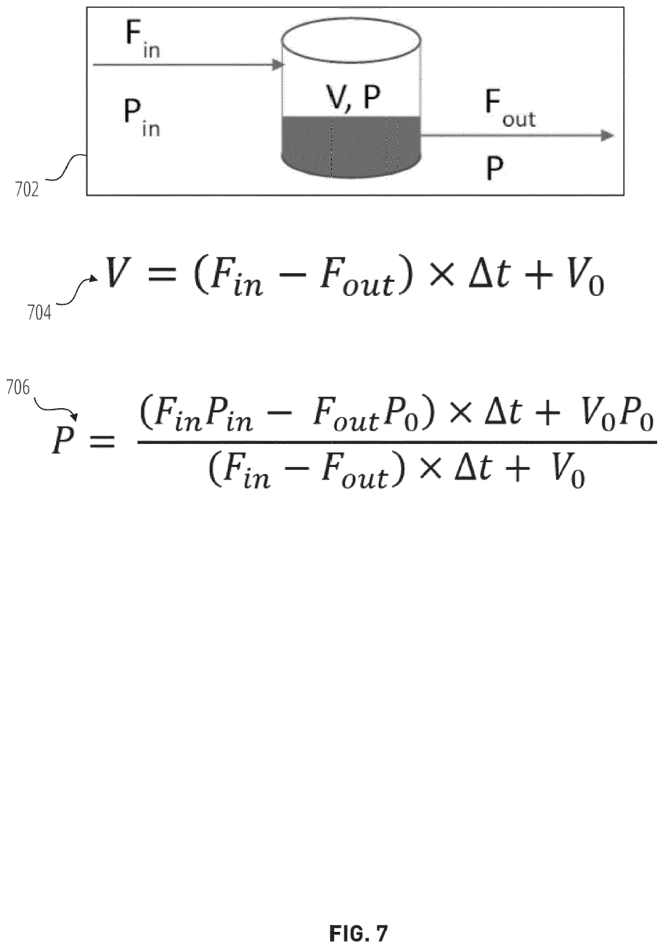

In other embodiments one or more other formulas may be utilized to configure a plantwide optimization model. For example, in some embodiments, a rundown blender is associated with a particular outflow of product. FIG. 7 illustrates formulas utilized by a plantwide optimization model for a rundown blender with outflow in accordance with at least one example embodiment of the present disclosure. Specifically, FIG. 7 depicts a rundown blender visualization 702. The final properties associated with a product in the rundown blender may similarly be projected utilizing any of a myriad of known blending models in a circumstance where the rundown blender is associated with an outflow.

As illustrated, the rundown blender is associated with a volume, V, and a set of product qualities, P. The inflowing input product is similarly associated with a flowrate Fᵢₙ and has the product qualities represented by Pᵢₙ. The input product is mixed with the product existing in the rundown blender already utilizing a continuous stirred tank model. The product subsequently flows out of the rundown blender at a particular rate of Fₒᵤₜ, and having particular product properties represented by P. In this regard, using a blending model, the volume of the product in the rundown blender is estimated by the formula 704, and the corresponding properties for such a volume of product is estimated by the formula 706. In this regard, the formulas formula 704 and formula 706 may be simplified to the formula 604 and formula 606 in a circumstance where the outflow is assumed or represented as zero Additionally or alternatively, in some embodiments, similar formulas corresponding to the formula 608 and formula 610 may similarly be derived from the formula 704 and formula 706 for use in configuring a corresponding plantwide optimization model as described herein.

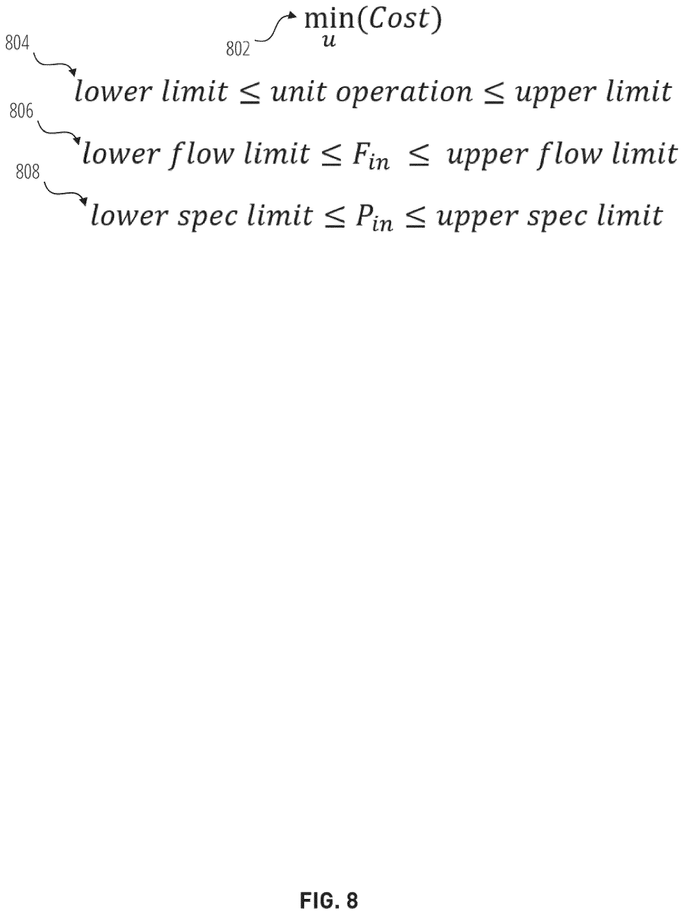

FIG. 8 illustrates a visualization of operational constraints defined via a plantwide optimization model in accordance with at least one example embodiment of the present disclosure. Specifically, FIG. 8 defines a particular plantwide optimization model 802. In this regard, the plantwide optimization model minimizes an operational cost using key operating handles for each processing units, u, subject to operational constraints on the operation of the processing units. In this regard, a generic operational constraint is defined for a particular unit operation as depicted with respect to operational constraints 804 by defining a lower limit boundary and an upper limit boundary within which a value of a particular operational parameter for a particular processing unit must fall to satisfy the operational constraint. The operational constraints generated for a particular plantwide optimization model specifically represent constraints on the flow to each rundown blender, as represented by operational constraints 806, and constraints on the product properties of the input product flowing to the rundown blender, as represented by operational constraints 808. It will be appreciated that, in other embodiments, the operational constraints may be defined as a constraint on an input product volume rather than a flowrate constraint, for example in the circumstance where a plantwide optimization model is defined utilizing a volume specification instead of a flowrate specification. It will be appreciated that the formulas as depicted and described herein may similarly be convertible to a volume specification instead of a flowrate specification utilizing known models.

In some contexts, V₀ and P₀ represent the current volume and product properties for a given product tank (e.g., a rundown blender including a particular current product). In this regard, these values may be updated as the processing plant operates utilizing the models described above. When a product tank is switched, however, and a new tank is employed, the current volume and product properties may be reset to zero if the new product tank is empty, or to a heel volume and heel product properties in a circumstance where the new product tank includes residual product from a prior blend.

In some contexts, V₀ and/or P₀ are determinable based at least in part on measured values. For example, in some embodiments, the apparatus 200 may utilize sensor(s), probe(s), and/or other mechanism(s) to measure the current volume of a rundown blender and/or the properties of a product currently within the rundown blender. In this regard, in some embodiments, a product tank embodying the rundown blender is sampled at a particular interval, or multiple intervals, during a blending operation, such that the results of the sampled measurements may be utilized to reset the current qualities of the optimization model to correct the remainder of the blending operation to address any current deficiencies caused by any of a myriad of unexpected or erroneous influences.

Additionally, or alternatively, in some embodiments, the final blend volume may be artificially reduced during modeling of the start of the blending operation, and then reset towards the end of the modeling of the blending operation. Such artificial manipulations drive the product properties to their required specification faster, then relax at the end of the blend. Such embodiments may improve the robustness of the modeling in a circumstance where a starting heel of product, for example, has different product properties than a current product specification for a target product.

In some embodiments, the plantwide optimization model generates particular operational constraints. For example, in some embodiments, the plantwide optimization model generates operational constraints embodying optimal boundaries, for example low/high limits, for tank feed header properties of one or more upstream components embodying a main header of the processing plant, and/or generates operational constraints embodying optimal boundaries, for example low/high limits, for tank integrating CVs properties at a desired, future incremental production volume as compared to a current time, *t.*

In this regard, embodiments may project the multiple completion horizons represented by a production duration and/or timestamp interval to tanks header feed properties. In some such embodiments, at each execution period of the optimization process utilizing the plantwide optimization model, embodiments of the present disclosure may calculate the headers (e.g., embodying tank feeds of input products) optimum boundaries while taking into account each tank volume left to be produced for particular target product(s) to meet the product specifications cumulatively at the end of each tank (e.g., when the tank embodied by or as part of a rundown blender is at a desired volume). Upon next execution, the header properties are calculated again, with new updated process conditions based on the current operation of the processing plant. In this regard, tank header CVs low and/or high limits may be set accordingly. The optimization horizon for the optimization process and corresponding plantwide optimization model continues to shift onward while product is being produced in the multiple tanks of the rundown blenders. In this regard, such embodiments result in the optimal recommended limits for each header, tank feed, and/or tank feed properties CVs to meet the product specifications for each tank at the end of the tank's own production horizon. The limits for tank integrated CVs may be set according to commercial specifications, and generally may be kept wide.

With respect to optimizing tank integrating CVs specifically, at each execution period, time varying limits for the tank integrated/cumulative properties CVs may be calculated at a specified volume in the future from a current starting time. Such optimizations are performed by the plantwide optimization model in a manner that accounts for each product quality and volume in the tank, as well as based on the expected product specification for the target product desired at the completion of the tank (i.e., when a final volume is produced and the tank is considered full). In this regard, the plantwide optimization model generates, at each execution period, the optimal limits for the tank integrated CVs as calculated for specified future incremental volume(s). For example, where:
Feed_rate_header_current is defined as "F_C",
Feed_property_header_current (DEGC, KG/M3, and so on) is defined as a vector of multiple properties (for example density, flashpoint, T05 distillation temperature, and/or the like)
Tank_volume_current is defined as "V_C",
Tank_property_integrated_current (DEGC, KG/M3, and so on) is defined as another vector of multiple properties "P_C",
Tank_volume_at_full is defined as "V_F",
Tank_property_integrated_at_full is defined as another vector of multiple properties "P_F",
PWO_execution_period is a time defined in minutes,
NEXEC is defined as the number of executions for future target calculations,
particular outputs may be generated including:
Incremental_volume_current V_I = Feed_rate_header_current F_C x [PWO_execution_period / 60] (M3);
Remaining_volume_current V_R = Tank_volume_at_full V_F - Tank_volume_current V_C;
Number_incremental_volumes_future = [Remaining_volume_current V_R / Incremental_volume_current V_I].

In this regard, it may similarly be derived that for OptTarget1_Feed_property_header_CV and OptTarget2_Tank_property_integrated_CV:
CV_OPT_TARGET1 = [V_F x P_F MINUS V_C x P_C] / V _R, and
CV_OPT_TARGET2 = [V_C x P_C PLUS CV_OPT_TARGET1 x V_I x NEXEC] / [V_C PLUS V_I x NEXEC],

Where NEXEC for the second case normally varies between 1 and [PWO_prediction_horizon (MINUTES) / PWO_execution-period (MINUTES)]. In this regard, the steady state predictions are under the PWO visible and controllable horizon, indicating that the recommended optimum targets are within the plantwide visible optimization horizon of control.

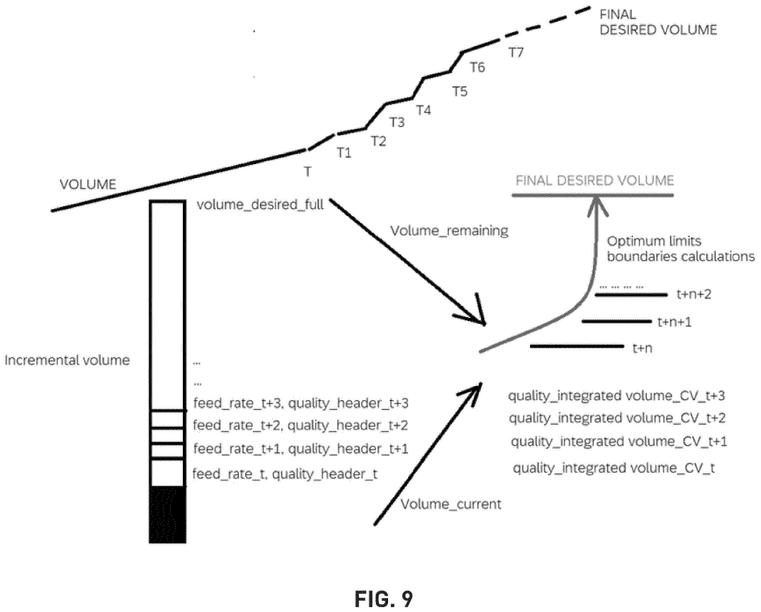

FIG. 9 illustrates a visualization of operational constraints for incremental tank feed header properties to reach a final volume in accordance with at least one example embodiment of the present disclosure. As illustrated, one or more blending laws may be utilized for different properties. For example, in some embodiments, one or more linear volume blending laws may be utilized for one or more product properties. In some other embodiments, one or more custom blending laws may be utilized for one or more product properties, for example custom blending laws specific to the particular processing plant. In this regard, the limits boundaries calculations are updated at each execution interval and are usable by a plantwide optimization model in conjunction with any of a myriad of other operational constraints and operational requirements (e.g., defined by product plan data) to calculate the current optimal manipulated moves at each execution.

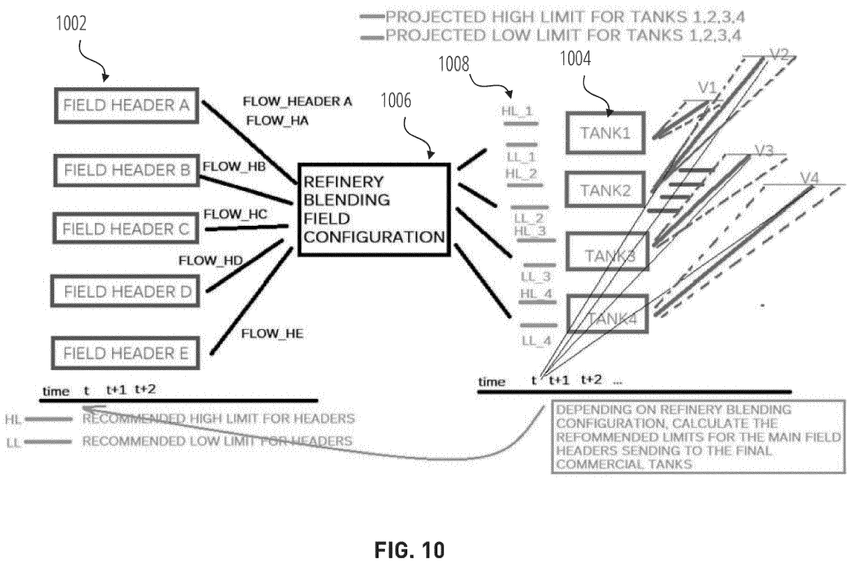

FIG. 10 illustrates a visualization of operational constraints for a plurality of field headers and a plurality of rundown blenders in accordance with at least one example embodiment of the present disclosure. Specifically, FIG. 10 depicts header limit boundaries 1008 associated with a plurality of field headers 1002 depending on a particular configuration 1006 for a plurality of product tanks 1004 embodying or as part of a plurality of rundown blenders. It will be appreciated that, depending on the refinery blending field configuration represented by configuration 1006 for the main blending field headers represented by field headers 1002, and which input product streams are entering which final rundown blenders represented by the product tanks 1004, the plantwide optimization model may calculate the constraints embodying the low and/or high boundary limits of the header limit boundaries 1008 at each execution interval for each of the field headers 1002 sending their product as an input product stream to the final commercial tanks.

In some embodiments, the calculated boundary limits embodying the header limit boundaries 1008 are further optimized utilizing one or more process consideration(s). For example, such process considerations may be utilized to optimize for limits set online to ensure that the properties feasibility of the solution of each product tanks 1004 is feasible within the production duration associated with each individual tank. In this regard, For example as depicted, if density is too high in TANK1 as depicted, calculated limits suggest to decrease the field headers A, B, C, D, and E but decreasing header limits for density may result in lower flashpoint overall for the field headers, which can be problematic if TANK2 is already at a low flashpoint limit and/or if TANK2 is close to the end of its production horizon embodying a production duration. Accordingly, extending the principles depicted and described herein, when starting from multiple rundown blenders having multiple horizons, limit projections to the tank headers feeds/tank header integrating CVs properties to meet the commercial tanks product specifications at the end of each individual tank's production horizon. Similarly, accounting for the refinery field blending configuration from the process units outlet streams to the field main headers and the final commercial tanks embodying the rundown blenders, the field blending configuration can be pre-defined and/or otherwise defined beforehand to ensure the overall solution feasibility for the different commercial target products produced in each of the tanks as depicted. In this regard, optimum limits boundaries recommendations are successfully extended to the individual processing units products properties for a particular type of target product produced at the end of the production duration and/or envelope in each of the final commercial tanks.

Having described example systems and apparatuses, data models, and visualizations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

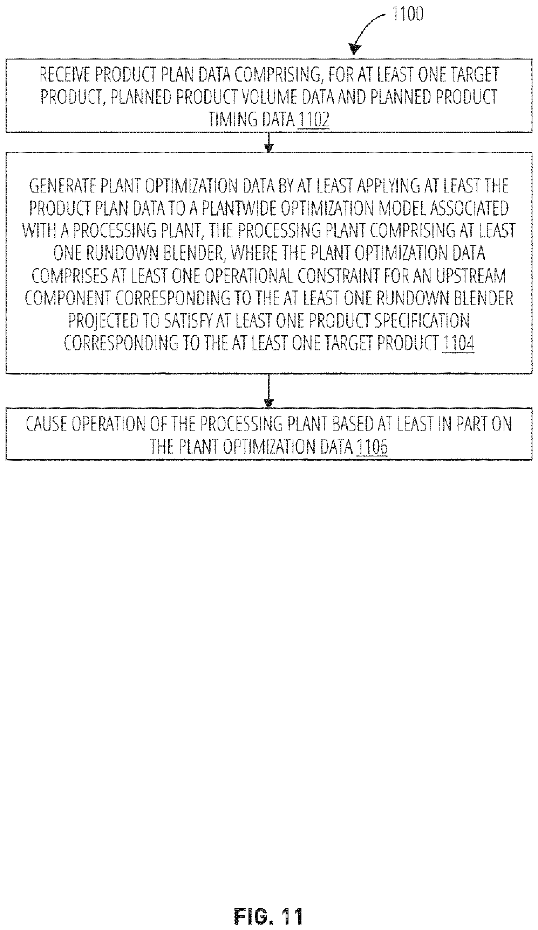

FIG. 11 illustrates an example process 1100 for improved optimization of processing plant control. In some embodiments, the process 1100 is embodied by computer program code stored on a non-transitory computer-readable storage medium of a computer program product configured for execution to perform the process as depicted and described. Alternatively or additionally, in some embodiments, the process 1100 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one apparatus, at least one physical component, at least one processing plant system, a scheduling system, and/or the like. For purposes of simplifying the description, the process 1100 is described as performed by and from the perspective of the apparatus 200.

Although the example process 1100 depicts a particular sequence of operations, the sequence may be altered without departing from the scope of the present disclosure. For example, some of the operations depicted may be performed in parallel or in a different sequence that does not materially affect the function of the process 1100. In other examples, different components of an example device or system that implements the process 1100 may perform functions at substantially the same time or in a specific sequence.

According to some examples, the method includes receiving product plan data at operation 1102. The product plan data may include planned product volume data and planned product timing data corresponding to any number of target products to e produced, for example at least one target product. Additionally or alternatively, in some embodiments, the product plan data includes planned product specification(s) for any number of target product(s) to be produced. For example, each such product specification may include requirements of property values for particular parameter(s) of a target property to be produced.

According to some examples, the method includes generating plant optimization data by at least applying at least the product plan data to a plantwide optimization model associated with a processing plant, the processing plant comprising at least one rundown blender at operation 1104. In some such embodiments, the plant optimization data comprises at least one operational constraint for an upstream component corresponding to the at least one rundown blender projected to satisfy at least one product specification corresponding to the at least one target product. In a circumstance where the processing plant includes a plurality of rundown blenders associated with a plurality of target products, the plantwide optimization model generates plant optimization data that sets such operational constraints in consideration of all such target products and corresponding product specifications, production durations, and planned production volumes.

According to some examples, the method includes causing operation of the processing plant based at least in part on the plant optimization data at operation 1106. In some embodiments, the apparatus 200 automatically reconfigures operation of at least one physical component of the processing plant based at least in part on the plant optimization data. In some other embodiments, the apparatus 200 causes such automatic reconfiguration, for example via transmission of one or more specially configured command(s) to another system that controls operation of the processing plant. Additionally or alternatively, in some embodiments, the apparatus 200 causes rendering of the plant optimization data to a user interface that enables a user associated with the user interface to control the processing plant. In this regard, the user may use such plant optimization data as recommendations or guidelines for manually controlling the processing plant in an optimized manner.

As described herein, the plantwide optimization models are depicted and described with respect to a flowrate specification. In this regard, formulas based on flowrates of inflows of input products and/or flowrates of outflows are utilized to derive the optimizations depicted and described herein. It will be appreciated that in some embodiments, a volume specification may be utilized instead. The conversion from a flowrate specification to a volume specification is derivable based at least in part on known equations for converting from a flowrate to a volume for either inflow and/or outflow.

### CONCLUSION

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving product plan data comprising, for at least one target product, planned product volume data and planned product timing data;
generating plant optimization data by at least applying at least the product plan data to a plantwide optimization model associated with a processing plant, the processing plant comprising at least one rundown blender,
wherein the plant optimization data comprises at least one operational constraint for an upstream component corresponding to the at least one rundown blender projected to satisfy at least one product specification corresponding to the at least one target product; and
causing operation of the processing plant based at least in part on the plant optimization data.

2. The computer-implemented method of claim 1, wherein causing operation of the processing plant based at least in part on the plant optimization data comprises:
causing rendering of the plant optimization data to a user interface that enables a user associated with the user interface to control the processing plant.

3. The computer-implemented method of claim 1, wherein causing operation of the processing plant based at least in part on the plant optimization data comprises:
automatically reconfiguring operation of at least one physical component of the processing plant based at least in part on the plant optimization data.

4. The computer-implemented method of claim 1, wherein the plant optimization data comprises at least a low limit and at least a high limit for at least one tank feed header property.

5. The computer-implemented method of claim 1, wherein the plant optimization data comprises at least a low limit and at least a high limit for at least one tank integrating control variable property.

6. The computer-implemented method of claim 1, wherein the product plan data comprises a plurality of planned product volume data and a plurality of planned product timing data corresponding to a plurality of target products, wherein the plurality of planned product timing data represents a plurality of distinct production durations.

7. The computer-implemented method of claim 1, wherein the plant optimization data comprises a range of values corresponding to at least one operational parameter of a tank feed header.

8. The computer-implemented method of claim 1, wherein the plantwide optimization model is defined based at least in part on a rate specification.

9. The computer-implemented method of claim 1, wherein the plantwide optimization model is defined based at least in part on a volume specification.

10. An apparatus comprising at least one processor and at least one non-transitory memory including computer-coded instructions thereon, the computer coded instructions, with the at least one processor, cause the apparatus to:
receive product plan data comprising, for at least one target product, planned product volume data and planned product timing data;
generate plant optimization data by at least applying at least the product plan data to a plantwide optimization model associated with a processing plant, the processing plant comprising at least one rundown blender,
wherein the plant optimization data comprises at least one operational constraint for an upstream component corresponding to the at least one rundown blender projected to satisfy at least one product specification corresponding to the at least one target product; and
cause operation of the processing plant based at least in part on the plant optimization data.

11. The apparatus of claim 10, wherein causing operation of the processing plant based at least in part on the plant optimization data comprises the computer coded instructions, with the at least one processor, further causing the apparatus to:
cause rendering of the plant optimization data to a user interface that enables a user associated with the user interface to control the processing plant.

12. The apparatus of claim 10, wherein causing operation of the processing plant based at least in part on the plant optimization data comprises the computer coded instructions, with the at least one processor, further causing the apparatus to:
automatically reconfigure operation of at least one physical component of the processing plant based at least in part on the plant optimization data.

13. The apparatus of claim 10, wherein the plant optimization data comprises at least a low limit and at least a high limit for at least one tank feed header property.

14. A computer program product comprising at least one non-transitory computer-readable storage medium having computer program code stored thereon that, in execution with at least one processor, configures the computer program product for:
receiving product plan data comprising, for at least one target product, planned product volume data and planned product timing data;
generating plant optimization data by at least applying at least the product plan data to a plantwide optimization model associated with a processing plant, the processing plant comprising at least one rundown blender,
wherein the plant optimization data comprises at least one operational constraint for an upstream component corresponding to the at least one rundown blender projected to satisfy at least one product specification corresponding to the at least one target product; and
causing operation of the processing plant based at least in part on the plant optimization data.

15. The computer program product of claim 14, wherein causing operation of the processing plant based at least in part on the plant optimization data comprises the computer program code stored thereon that, in execution with at least one processor, further configures the computer program product for:
automatically reconfiguring operation of at least one physical component of the processing plant based at least in part on the plant optimization data.
